# EUROPÄISCHE PATENTANMELDUNG

(11) **EP 2 710 936 A1**
(43) Veröffentlichungstag der Anmeldung: **26.03.2014**
(21) Anmeldenummer: 13193978.7
(22) Anmeldetag: 01.02.2013
(51) Int. Cl.: A47J 27/05

(54) **Gargefäß mit einem Aufsatzgefäß**

(30) Priorität: 06.02.2012 DE 102012100937
(62) Teilanmeldung aus: 13153577.5
(71) Anmelder: Vorwerk & Co. Interholding GmbH, 42275 Wuppertal (DE)
(72) Erfinder: Meggle, Martin, 33442 Herzebrock (DE); Hüsig, Matthias, 40878 Ratingen (DE)
(74) Vertreter: Müller, Enno

(57) **Zusammenfassung**

Die Erfindung betrifft ein Gargefäß (3) mit einem Aufsatzgefäß (13), wobei das Aufsatzgefäß (13) einen Gargut-Auflageboden (14) aufweist. Um ein Gargefäß mit einem Aufsatzgefäß der in Rede stehenden Art insbesondere hinsichtlich des Garprozesses innerhalb des Aufsatzgefäßes weiter zu verbessern, wird vorgeschlagen, dass eine oder mehrere sich senkrecht zur Erstreckung des Gargut-Auflagebodens (14) erstreckende, kaminartige Leitelemente (19) ausgebildet sind.

## Beschreibung

Die Erfindung betrifft ein Gargefäß mit einem Aufsatzgefäß, wobei das Aufsatzgefäß einen Gargut-Auflageboden aufweist, wobei eine oder mehrere sich senkrecht zur Erstreckung des Gargut-Auflagebodens erstreckende, kaminartige Leitelemente ausgebildet sind.

Gargefäße der in Rede stehenden Art sind bekannt, so insbesondere als Gargefäße im Haushaltsbereich. Weiter sind derartige Gargefäße zum Einsatz in elektrisch betriebenen Küchenmaschinen bekannt. Diese dienen insbesondere zum Garen von Lebensmitteln in dem Gargefäß, wobei bevorzugt bodenseitig des Gargefäßes eine Aufheizung ermöglicht ist. Diesbezüglich wird beispielsweise auf die DE 44 14 823 A1 verwiesen. Das dort vorgesehene Gargefäß ist mit einem Deckel verschließbar, welcher Deckel mittig eine Durchtrittsöffnung aufweist, so beispielsweise zum Hinzufügen weiterer Lebensmittel und/oder beispielsweise Gewürze auch während des Garprozesses. Darüber hinaus dient die Öffnung auch zum Durchtritt bzw. Austritt von in dem Gargefäß aufgebautem Dampf. Weiter ist diesbezüglich bekannt, das Gargefäß mit einem Aufsatzgefäß zu versehen, so weiter bevorzugt im Zusammenhang mit einer vorbeschriebenen Küchenmaschine mit einem Garaufsatz. Ein solcher Garaufsatz wird bevorzugt auf dem Deckel des Gargefäßes aufgestellt, wozu der Deckel eine entsprechende Aufstellfläche anbietet. Das Aufsatzgefäß weist einen zur Ablage von zu garendem Gut ausgebildeten Auflageboden auf, wobei weiter das Aufsatzgefäß bevorzugt deckelverschließbar ist.

Aus der GB 896 152 A ist ein Dampfkochtopf bekannt, der als Aufsatzgefäß für eine im unteren Bereich vorgesehene Verdampfungswanne ausgebildet ist. Ein sich senkrecht zu dem Gargutauflageboden erstreckendes kaminartiges Leitelement weist radial zu durchströmende Austrittsöffnungen für Dampf auf.

Die GB 2 414 925 A beschreibt ein Dampfgargerät mit einer Mehrzahl von oberhalb einem Dampferzeuger angeordneten Gargut-Auflageböden, die von Dampf durchströmbar sind. Ausgehend von einem untersten Gargut-Auflageboden ist ein kaminartiges Leitelement vorgesehen.

Aus der WO 02/28240 A2 ist ein Dampfgargerät bekannt, bei welchem in einem oberen, gleichsam deckelartig auf einem unteren Topf aufsitzenden Aufsatzgefäß Dampf erzeugt wird und in den unteren Topf zum Garen von Gargut eingeleitet wird.

Die DE 93 06 808 U1 beschreibt einen Dampfgarer, bei welchem durch ein kaminartiges Leitelement im Gargut-Auflageboden Dampf in das Gefäß eingeleitet wird.

Aus der DE 683 116 C schließlich ist ein Dampfgarer bekannt, bei welchem gleichfalls durch ein kaminartiges Leitelement Dampf von einem Dampferzeuger nach oben durch einen Gargut-Auflageboden hindurchgeleitet wird.

Ausgehend von dem dargelegten Stand der Technik beschäftigt sich die Erfindung mit der Aufgabenstellung, ein Gargefäß mit einem Aufsatzgefäß und einem oder mehreren kaminartigen Leitelementen anzugeben, das hinsichtlich einer Gar-Zubereitung von Speisen vorteilhaft ausgebildet ist.

Diese Aufgabe ist beim Gegenstand des Anspruches 1 gelöst, wobei darauf abgestellt ist, dass die Leitelemente hinsichtlich ihres Öffnungsquerschnittes veränderbar ausgebildet sind.

Entsprechend lässt sich hierdurch insbesondere die Dampfdurchtrittsmenge pro Zeiteinheit durch die kaminartigen Leitelemente regulieren, wobei weiter bevorzugt der Öffnungsquerschnitt stufenlos einstellbar ist, alternativ stufenweise, hierbei insbesondere den vollen Öffnungsquerschnitt freigebend bis hin zu die Durchtrittsöffnung durch das jeweilige Leitelement vollständig verschließend.

Weiter bevorzugt ist bei einer Anordnung von mehreren Leitelementen eine einheitliche, zusammenhängende Veränderung der Öffnungsquerschnitte vorgesehen; alternativ die Veränderung der einzelnen Öffnungsquerschnitte, ggf. in Gruppen von Leitelementen, unabhängig voneinander.

Die kaminartigen Leitelemente bilden bevorzugt rohrartige Leitelemente, insbesondere im Dampf-Übergangsbereich zwischen Gargefäß und Aufsatzgefäß, wobei der Querschnitt eines Kamins bevorzugt kreisrund ist, alternativ oval, langgestreckt oval oder auch quadratisch bzw. langgestreckt rechteckig, darüber hinaus auch jeden weiteren geometrischen Querschnitt aufweisend.

Es kann ein kaminartiges Leitelement vorgesehen sein, weiter bevorzugt eine Mehrzahl solcher kaminartiger Leitelemente, wobei weiter jeder Kamin eine Querschnittsfläche von bevorzugt 10 bis 100mm² aufweist.

Das Leitelement oder die Leitelemente erstrecken sich hierbei weiter bevorzugt in der tendenziellen Aufstiegsrichtung des in dem Gargefäß und insbesondere mittels der Leitelemente in das Aufsatzgefäß aufsteigenden Dampfes. Hierdurch ist in einer Ausgestaltung eine gerichtete Strömung des Dampfes erreichbar. Darüber hinaus ist insbesondere in Abhängigkeit von der senkrecht zum Gargut-Auflageboden betrachteten Höhe der Leitelemente die Dampfeinlassebene in dem Aufsatzgefäß unterhalb des Gargutes oder zwischen dem Gargut oder darüber hinaus oberhalb des Gargutes bildbar.

Die vorgeschlagene Lösung eignet sich insbesondere für Gargefäße mit einem bei Bedarf aufsetzbaren Aufsatzgefäß, dies bevorzugt unter Nutzung eines Gargefäßdeckels zum Anbieten einer Aufstellfläche für das Aufsatzgefäß, darüber hinaus jedoch auch für ein Gargefäß mit an diesem unmittelbar angeordneten Aufsatzgefäß.

Bevorzugt ist weiter ein kaminartiges Leitelement in einem Bodenteil ausgebildet, wobei in Zusammenwirkung mit dem Bodenteil sich insbesondere umgebend zu dem Leitelement oder zu den Leitelementen sich eine Auffangwanne etwa für Kondensat ergibt. Insgesamt ist bevorzugt, dass das Bodenteil eine einheitliche Auffangwanne ausformt, deren bevorzugt im Betrieb horizontale Bodenfläche durchsetzt ist von dem oder den Leitelementen. Das sich im Zuge des Garprozesses insbesondere innerhalb des Aufsatzgefäßes ergebende Kondensat und/oder Garflüssigkeit kann sich entsprechend in der Auffangwanne sammeln, dies weiter bevorzugt zur späteren Verwendung der Flüssigkeit, bspw. zur Bildung einer Soße oder dergleichen.

Besonders vorteilhaft erweist sich eine Ausgestaltung, bei welcher das Bodenteil bevorzugt unterhalb des Gargut-Auflagebodens angeordnet ist, auf welchem Gargut-Auflageboden das oder die zu garenden Lebensmittel insbesondere innerhalb des Aufsatzgefäßes angeordnet sind. Entsprechend ist eine Beabstandung, insbesondere vertikale Beabstandung, zwischen dem zu garenden Gut und dem Boden der bevorzugten Auffangwanne gegeben, so dass entsprechend bevorzugt das Gargut im Zuge des Garprozesses nicht mit der abgesonderten Flüssigkeit bzw. dem Kondensat in dauerhaftem Kontakt tritt.

Zudem sind in der Auffangwanne bevorzugt eine oder mehrere Ablauföffnungen ausgebildet. Diese Ablauföffnungen sind weiter bevorzugt in dem oder den Bereichen zwischen mehreren kaminartigen Leitelementen in dem Bodenteil vorgesehen. Der Öffnungsquerschnitt einer solchen Ablauföffnung entspricht in einer bevorzugten Ausgestaltung dem Öffnungsquerschnitt des kaminartigen Leitelementes, kann darüber hinaus jedoch auch kleiner oder auch größer sein als die Querschnittsfläche im Bereich eines kaminartigen Leitelements.

Auch diesbezüglich sind runde, ovale oder langgestreckt ovale, darüber hinaus quadratische oder langgestreckt rechteckige Öffnungsquerschnitte bevorzugt. Durch die eine oder die mehreren Ablauföffnungen kann Kondensat und/oder Garflüssigkeit die Auffangwanne verlassend und das Bodenteil durchtretend abtropfen, bevorzugt in das den aufsteigenden Dampf produzierende Gargefäß, womit entsprechend die Flüssigkeit zur Dampferzeugung in dem Gargefäß im Zuge des Garprozesses versetzt wird mit abtropfendem Kondensat oder Garflüssigkeit, so dass der aufsteigende Dampf entsprechend aromatisiert wird.

Die Ablauföffnung oder mehreren Ablauföffnungen sind in weiter bevorzugter Ausgestaltung durch ein Verschlussteil verschließbar, dies insbesondere zur Bildung einer Kondensat und/oder Garflüssigkeit auffangenden Wanne. Dies bietet weiterhin den vorteilhaften Effekt insbesondere bei einem von dem Gargefäß abnehmbaren Aufsatzgefäß, das von diesem bei Verschluss der einen oder mehreren Ablauföffnungen, insbesondere von dem Bodenteil keine Flüssigkeit herabtropft im Zuge des Absetzens des Aufsatzgefäßes bspw. auf eine Arbeitsfläche. Die Ablauföffnungen im Bodenteil dienen weiterhin insbesondere in ihrer Offenstellung bevorzugt als Dampfdurchtrittsöffnungen zwischen Gargefäß und Aufsatzgefäß, wobei die Öffnungsebene bevorzugt vertikal unterhalb der Öffnungsebene der kaminartigen Leitelemente positioniert ist. Entsprechend ist hier ein Dampfeinströmen in das Aufsatzgefäß in zumindest zwei unterschiedlichen vertikalen Ebenen erreichbar. Die Ausströmöffnungen des einen oder der mehreren Leitelemente dienen in der Verschlussstellung der Ablauföffnungen bevorzugt als Überlauföffnungen der gebildeten Wanne.

Das Verschlussteil ist bevorzugt als Verschlussschieber ausgebildet, so insbesondere als Linearschieber oder als Drehschieber. Bevorzugt wird diesbezüglich weiter eine handbetätigbare Verlagerbarkeit des Verschlussteiles durch den Benutzer. Darüber hinaus sind auch Lösungen bevorzugt, bei welchen das Verschlussteil bspw. elektromotorisch verlagerbar ist, weiter bevorzugt ausgelöst und/oder gesteuert durch die das Gargefäß aufnehmende Küchenmaschine.

In diesem Zusammenhang bietet es sich weiter an, wie auch bevorzugt, dass das Verschlussteil sowohl zum Verschluss einer Einströmöffnung des kaminartigen Leitelements wie auch zum Verschluss einer Ablauföffnung ausgebildet ist. Durch entsprechende Verlagerung des Verschlussteiles sind hierbei sowohl zumindest eine Einströmöffnung des kaminartigen Leitelementes wie auch eine Ablauföffnung verschließbar, darüber hinaus alle Einströmöffnungen und alle Ablauföffnungen. Bevorzugt wird diesbezüglich eine Ausgestaltung, bei welcher zufolge entsprechender Verlagerung des Verschlussteiles die Einströmöffnung des kaminartigen Leitelementes bzw. alle Einströmöffnungen freigegeben werden, während die eine Ablauföffnung oder auch alle Ablauföffnungen verschlossen werden oder umgekehrt. Hierdurch ist insbesondere eine variable Dampfeinleitungshöhe innerhalb des Aufsatzgefäßes erreicht, nämlich, wie bevorzugt, das Dampfeinströmen unmittelbar oberhalb des Bodenteiles bei Öffnen der Ablauföffnungen oder vertikal zum Bodenteil nach oben beabstandet durch die freigegebenen kaminartigen Leitelemente bei entsprechendem Verschluss der Ablauföffnungen.

Bevorzugt ist weiter eine vertikal obere Austrittsöffnung des Leitelements ganz oder teilweise von einem geschlossenen Bodenabschnitt des Gargut-Auflagebodens überdeckt, dies weiter bevorzugt mit vertikalem Abstand zwischen Bodenabschnitt des Auflagebodens und der Austrittsfläche des Leitelements. Hierdurch ist eine gleichmäßige Verteilung insbesondere des aus dem oder den kaminartigen Leitelementen austretenden Dampfes unterhalb des Gargut-Auflagebodens erreicht, wobei die geschlossenen Bodenabschnitte oberhalb der Austrittsöffnungen der Leitelemente eine Ablenkung des Dampfes insbesondere zur Seite, d.h. zumindest annähernd rechtwinklig zur Austrittsrichtung bewirken.

Der Gargut-Auflageboden bildet in weiter bevorzugter Ausgestaltung gegenüber einer Bodenfläche des Auflagebodens vertikal nach oben vorstehende Distanzbereiche aus. Diese sind bevorzugt gleichmäßig verteilt über die Bodenfläche angeordnet, alternativ unregelmäßig verteilt. Die Distanzbereiche sind weiter bevorzugt zylinder- oder kegelförmige Erhebungen, weiter bspw. noppenartige Abstandselemente. Das auf dem Auflageboden aufliegende Gargut ist hierdurch zumindest partiell, darüber hinaus bevorzugt vollständig, zur Bodenfläche des Auflagebodens distanziert, erfährt hierbei weiter bevorzugt eine lediglich punktuelle oder zumindest kleinflächige Abstützung.

Weiter belässt der Gargut-Auflageboden bevorzugt Durchtrittsöffnungen für einen Dampfdurchtritt, insbesondere für aus dem Gargefäß nach oben in das Aufsatzgefäß aufsteigenden Dampf, der durch das oder die kaminartigen Leitelemente und/oder durch die eine oder mehreren Ablauföffnungen geführt ist. Diese Dampfdurchtrittsöffnungen sind bevorzugt mit Bezug auf einen Querschnitt durch den Gargut-Auflageboden zwischen den Distanzbereichen ausgebildet, welche Distanzbereiche weiter bevorzugt nach unten einen geschlossenen Bodenabschnitt aufweisen. Insbesondere bei einer bevorzugten zumindest partiellen Überdeckung der Austrittsöffnung zumindest eines Leitelements durch den geschlossenen Bodenabschnitt des Auflagebodens ergibt sich hieraus eine labyrinthartige Dampfdurchdringung und entsprechende Dampfverteilung, wobei der Dampf bevorzugt den oder die kaminartigen Leitelemente zumindest tendenziell senkrecht nach oben durchtritt und hiernach von dem bevorzugt das Leitelement überdeckenden geschlossenen Bodenabschnitt nach außen abgelenkt wird, wonach der Dampf letztlich durch die Dampfdurchtrittsöffnungen im Auflageboden das Gargut erreicht.

In weiter bevorzugter Ausgestaltung durchsetzt zumindest ein Leitelement den Gargut-Auflageboden, so dass, wie weiter bevorzugt, die obere Austrittsöffnung des Leitelements in Betriebsstellung oberhalb des Gargut-Auflagebodens angeordnet ist, weiter bevorzugt oberhalb gegebenenfalls vorgesehener Distanzbereiche. Die vertikale Höhe der Austrittsöffnung über dem Gargut-Auflageboden kann beispielsweise dem 0,5 bis 10-Fachen eines freien Durchmessers der Austrittsöffnung bzw. des Leitelements entsprechen. Ein reales Maß des freien Durchmessers kann beispielsweise 5 bis 10 mm betragen. Eine absolute Höhe betreffend die genannte vertikale Höhe kann zwischen 5 und 50 mm liegen.

Hierdurch ist ein Ausströmen von durch das kaminartige Leitelement geführten Dampf zwischen oder auch oberhalb des Gargutes erreichbar, wobei die Austrittsöffnung, wie auch bei den vorbeschriebenen Lösungsansätzen, stirnseitig des Leitelements innerhalb einer bevorzugt horizontalen Ebene ausgebildet sein kann, alternativ seitlich des Leitelements, eine Seitenwandung desselben durchsetzend. Insbesondere bei letzterer Ausgestaltung können auch umfangsmäßig des kaminartigen Leitelementes mehrere auch in der Höhe zueinander versetzt angeordnete Austrittsöffnungen vorgesehen sein, so dass ein Ausströmen von Dampf aus dem kaminartigen Leitelement in Art eines Sprinklers erreichbar ist.

Bevorzugt ist weiter eine Ausströmöffnung des kaminartigen Leitelements vertikal beabstandet zu dem Gargut-Auflageboden, so weiter bevorzugt mit einem vertikalen Abstandsmaß, das dem 1- bis 30-Fachen des größten Querschnittsmaßes der Ausströmöffnungen entspricht.

Zudem ist bevorzugt die Einströmöffnung des Leitelements bzw. sind eine oder mehreren Einströmöffnungen bei Anordnung einer Vielzahl von Leitelementen vertikal unterhalb des Gargut-Auflagebodens ausgebildet, wobei weiter bevorzugt insgesamt die in Betriebsstellung betrachtete vertikale Höhe des in jedem Leitelement ausgebildeten Kanals dem 2- bis 20-Fachen, weiter bevorzugt dem 3- bis 10-Fachen des größten Quererstreckungsmaßes des Kanals entspricht.

In einer vorteilhaften, weiter bevorzugten Ausgestaltung ist das Leitelement hinsichtlich der vertikalen Höhe seiner Aus- und/oder Einströmöffnungen veränderbar. Hierzu kann das Leitelement bzw. können die Leitelemente mit einer von außen durch den Benutzer zugänglichen Handhabe oder dergleichen versehen sein, mittels welcher eine entsprechende Vertikalverlagerung zumindest eines Leitelementes durchgeführt werden kann. Auch ist diesbezüglich eine teleskopartige Verlängerung bzw. Kürzung der Vertikalerstreckung eines Leitelementes möglich. Insbesondere zufolge einer möglichen Einstellung der vertikalen Höhe der Ausströmöffnung zumindest eines Leitelementes ist der Dampfaustritt bei geöffneten Einströmöffnungen hinsichtlich der Austrittsebene innerhalb des Aufsatzgefäßes variierbar, so insbesondere variierbar zwischen einer Stellung mit einem Dampfaustritt unterhalb des zu garenden Guts, gegebenenfalls unterhalb der Gargut-Auflageebene bis hin zu einer Austrittsebene oberhalb des Gargutes. Bei einer möglichen teleskopartigen Vertikalerstreckungsänderung des Leitelementes können insbesondere wandungsseitig vorgesehene Ausströmöffnungen durch das Leitelement-Außenrohr auf- oder zugeschiebert werden, womit nicht nur eine Veränderung der Dampfaustrittsebene erreichbar ist, sondern darüber hinaus auch bei mehreren in Vertikalrichtung übereinander angeordneten Ausströmöffnungen die Dampfaustrittsmenge pro Zeiteinheit.

Auch ist vorgesehen, dass die Einströmöffnung unter Durchsatz eines gegebenenfalls gesonderten Gargefäß-Deckels bis in das Gargefäß hinein ragt. Entsprechend taucht das Leitelement mit seiner Einströmöffnung bevorzugt in den dampferzeugenden Raum des Gargefäßes ein, wobei weiter bevorzugt bei einer abnehmbaren Ausgestaltung des Aufsatzgefäßes der die Abstützfläche für das Aufsatzgefäß zugleich bildende Rührgefäß-Deckel eine von dem oder den Leitelementen zu durchsetzende Öffnung aufweist.

Weiter alternativ kann anstelle des Rührgefäß-Deckels ein Zweitboden vorgesehen sein, der unterhalb des Gargut-Auflagebodens vorgesehen ist. Dieser Zweitboden bzw. der Rührgefäß-Deckel weist eine dem Leitelement zugeordnete Öffnung auf, wobei bevorzugt das Leitelement zumindest teilweise, mit Ausnahme des Kaminweges selbst, die Öffnung verschließt, dies insbesondere durch einen zumindest annähernd dichtenden Verschluss der Öffnung unter Anlage der umlaufenden Außenwandung des Leitelements an dem Öffnungsrand. Entsprechend wird bei einer derartigen Ausgestaltung bzw. bei einer derartigen Vertikalstellung des Leitelements der in dem Gargefäß erzeugte Dampf gezielt und bevorzugt ausschließlich durch den Kaminweg des Leitelements in Richtung auf den Gargutraum in dem Aufsatzgefäß gleitet. Eine solche Ausgestaltung bietet sich weiter bevorzugt an im Zusammenhang mit einer willensbetont vorzunehmenden Änderung der vertikalen Höhe insbesondere der Ausströmöffnung des Leitelements. So ist in einer Vertikalstellung des Leitelements die Öffnung im Rührgefäß-Deckel bzw. im Zweitboden über die Querschnittsfläche des Kaminweges hinaus geöffnet, so dass entsprechend in dem Gargefäß erzeugter Dampf an dem Leitelement vorbei bevorzugt von unten das Gargut beaufschlagt, dies gegebenenfalls bei geringer Dampfdurchsetzung des Kaminweges. In der Deckelöffnungs-Verschlussstellung wird der Dampf allein durch den Kaminweg geführt, dies weiter bevorzugt im Zusammenhang mit einer Ausrichtung der Ausströmöffnung des Leitelementes oberhalb des Garguts zur alleinigen Dampfbeaufschlagung des Gargutes von oben. In diesem Zusammenhang bietet es sich weiter an, den Aufsatzgefäß-Deckel zur Umlenkung des aus der Ausströmöffnung des Leitelementes austretenden Dampfes zu nutzen, wobei weiter bevorzugt im Zuge des Garprozesses die Reflektionswärme von diesem Deckel weiter genutzt wird.

Zum Verschluss der Rührgefäß-Deckelöffnung bzw. Zweitboden-Öffnung weist das Leitelement zugeordnet zu der Öffnung bevorzugt einen Konusabschnitt auf, welcher insbesondere bei einer vertikalen Abwärtsverlagerung des Leitelementes entsprechend dichtend gegen den Öffnungsrand tritt. Ein solcher Konusabschnitt besteht weiter bevorzugt aus einem, die Abdichtung erbringenden Weichkunststoff- oder Gummimaterial.

Zufolge einzelner oder mehrerer der vorbeschriebenen Merkmale kann der in dem Gargefäß und in das Aufsatzgefäß geleitete Dampf hinsichtlich der Menge pro Zeiteinheit und/oder hinsichtlich der Austrittsebene innerhalb des Aufsatzgefäßes variiert werden. Eine Dampfbeaufschlagung des in dem Aufsatzgefäß angeordneten Gargutes von oben erweist sich hinsichtlich des Garvorganges als schonend. Darüber hinaus kann hierdurch auch eine Warmhaltefunktion erreicht werden. Durch die ggf. vorgesehenen Distanzbereiche bzw. Abstandshalter kann sich der Dampf insbesondere unter dem Gargut gleichmäßig verteilen, wobei weiter durch diese Abstandshalter und/oder durch die kaminartigen Leitelemente verhindert wird, dass das Gargut die Dampfeintrittsöffnungen im Aufsatzgefäß verschließen, so das sich diese zusetzen.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, ggf. also auch dimensionslos, insbesondere 1,01-Fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel und der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: ein Gargefäß mit einem Aufsatzgefäß, wobei das Gargefäß in einer elektrisch betriebenen Küchenmaschine aufgenommen ist;
- Fig. 2: den Vertikalschnitt durch den Öffnungsbereich des Gargefäßes bei aufgesetztem Aufsatzgefäß, eine erste Ausführungsform betreffend;
- Fig. 3: eine der Fig. 2 entsprechende Darstellung, jedoch nach Veränderung eines Dampfweges;
- Fig. 3a: eine prinzipielle Darstellung für eine seitliche Höhenverstellung eines Leitelementes;
- Fig. 4: eine Ausschnittdarstellung des Bereiches eines Gargut-Auflagebodens im Aufsatzgefäß, eine zweite Ausführungsform in einer ersten Dampfwegstellung betreffend;
- Fig. 5: eine der Fig. 4 entsprechende Darstellung, jedoch betreffend einen veränderten Dampfweg;
- Fig. 6: eine schematische perspektivische Darstellung des in den Fig. 4 und 5 dargestellten Bereiches unter Fortlassung des Gargut-Auflagebodens;
- Fig. 7: eine der Fig. 6 entsprechende Darstellung, eine alternative Ausführung betreffend.

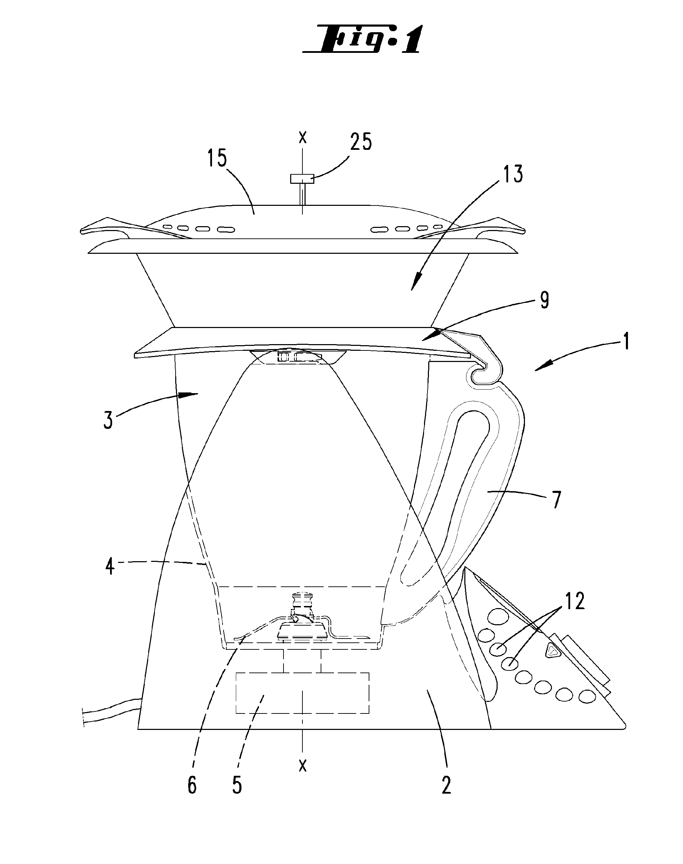

Dargestellt und beschrieben ist zunächst mit Bezug zu Fig. 1 eine Küchenmaschine 1 mit einem Gehäuse 2 zur Aufnahme eines Gargefäßes 3.

Zur Lagerung des Gargefäßes 3 ist die Küchenmaschine 1 gehäuseseitig mit einer Gefäßaufnahme 4 versehen. Ein in dem Gehäuse 2 in der dargestellten Ausführungsform bevorzugt angeordneter Elektromotor 5 dient zum Antrieb eines in dem Gargefäß 3 bodenseitig bevorzugt vorgesehenen Rührwerks 6, welches über eine Kupplungsanordnung mit der Antriebswelle des Elektromotors 5 in kraftschlüssige Verbindung bringbar ist.

Das Gargefäß 3 ist mit einem seitlichen Handgriff 7 versehen. Dieser erstreckt sich nahezu über die gesamte mantelwandaußenseitige Höhe des Gargefäßes 3, welche Mantelwandung des Gargefäßes 3 sich zur nach oben gerichteten Gargefäßöffnung 8 hin trichterförmig erweitert.

Die Gargefäßöffnung 8 ist insbesondere im Betrieb der Küchenmaschine 1, weiter insbesondere im Betrieb des Gargefäßes 3 überdeckt von einem Deckel 9. Dieser ist bevorzugt bajonettartig verriegelbar, so insbesondere in Zusammenwirkung mit turmartigen Gehäuseabschnitten der Küchenmaschine 1, nach welcher Verriegelung der Deckel 9 auch fest mit dem Gargefäß 3 verbunden ist.

Der Deckel 9 bietet eine dem Gargefäßinneren abgewandte, nach oben gerichtete Aufstandsfläche 10, insbesondere gebildet durch die Oberseite einer insbesondere im Betrieb im Wesentlichen horizontal ausgerichteten Deckelwand. Weiter bevorzugt ist die Aufstandsfläche 10 quergerichtet zu einer im Betrieb vertikalen Achse x, welche Achse x insbesondere das Gargefäß 3 sowie die Aufstandsfläche 10 mittig durchsetzt und weiter bevorzugt die Drehachse des im Bodenbereich des Gargefäßes 3 bevorzugt vorgesehenen Rührwerks 6 aufnimmt.

In der die Aufstandsfläche 10 bildenden Deckelwand ist weiter bevorzugt eine zentrale Öffnung 11 ausgebildet. Diese dient beispielsweise zur Zugabe weiterer Zutaten, wie beispielsweise Gewürze auch während des Rührwerk- und/oder Garprozesses in das Gargefäß 3.

In der vorgeschriebenen Konstellation ist die Küchenmaschine 1 dazu geeignet, in dem Gargefäß 3 gegebenenfalls unter ständigem Umwälzen des in dem Gargefäß 3 befindlichen Mediums, wie beispielsweise Wasser oder eine Brühe, eine Speise insbesondere durch Wärmezufuhr zuzubereiten. Hierzu ist weiter bevorzugt, insbesondere dem Bodenbereich des Gargefäßes 3 zugeordnet, eine Heizung in der Küchenmaschine 1 vorgesehen. Diese Heizung ist bevorzugt über Temperatursteller 12 in Form von Tasten oder Drehstellern hinsichtlich ihrer Heizleistung einstellbar.

Die Küchenmaschine 1 dient darüber hinaus bevorzugt auch zum Garen von Speisen, so insbesondere unter Nutzung des in dem Gargefäß 3 erzeugten und durch die Öffnung 11 des Deckels 9 nach oben abziehenden Dampfes. Hierzu ist gemäß der Darstellung in Fig. 1 auf dem Deckel 9 des Gargefäßes 3 ein Aufsatzgefäß 13 aufgesetzt. Dieses ist bevorzugt schüsselartig geformt mit einer in der Aufsetzstellung bevorzugt parallel zur Aufstandsfläche 10 des Deckels 9 verlaufenden Trennwand in Form eines Gargut-Auflagebodens 14.

Das Aufsatzgefäß 13 ist weiter bevorzugt im Betriebszustand überdeckt von einem Aufsatzdeckel 15.

Der Gargut-Auflageboden 14 ist in der in den Fig. 1 bis 3 dargestellten ersten Ausführungsform in Betriebsstellung vertikal beabstandet zu der durch die Aufstandsfläche 10 gebildeten Aufsetzebene des Aufsatzgefäßes 13, wobei das Aufsatzgefäß 13 bodenseitig zur Zusammenwirkung mit einem die Aufstandsfläche 10 umlaufend umgebenden Rand 16 einen bevorzugt an die Innenkontur des Randes 16 angepassten Stützrand 17 aufweist. Hierdurch ist das Aufsatzgefäß 13 in der Aufsetzstellung seitlich durch den deckelseitigen Rand 16 gefasst.

Der Stützrand 17 belässt nach radial innen einen Dampfdurchtritt, der bevorzugt hinsichtlich des Durchmessers bzw. einer kleinsten Horizontalerstreckung größer gewählt ist als der Durchmesser der deckelseitigen Öffnung 11.

Der Gargut-Auflageboden 14 ist mit einer Mehrzahl von bevorzugt schlitzartigen Durchtrittsöffnungen 18 versehen. Entsprechend ist der Gargut-Auflageboden 14 insbesondere zum Durchtritt von Dampf perforiert.

Weiter ist insbesondere dem Aufsatzgefäß 13 ein kaminartiges Leitelement 19 zugeordnet. Dieses Leitelement 19 weist zunächst einen in Zuordnungsstellung des Aufsatzgefäßes 13 auf dem Gargefäß 3 konzentrisch zur Vertikalachse x ausgerichteten Konusabschnitt 20 auf, der sich ausgehend von einem unteren, in Richtung auf das Gargefäßinnere weisenden Ende gleichmäßig nach vertikal oben erweitert. Hierbei ist ein unterer Minimaldurchmesser des Konusabschnittes 20 gewählt, der bevorzugt dem 0,5- bis 0,8-Fachen des Durchmessers der Öffnung 11 im Deckel 9 entspricht. Der Maximaldurchmesser des Konusabschnittes 20 in seinem vertikal oberen Endbereich entspricht bevorzugt dem 1,1-bis 1,5-Fachen des Deckelöffnungs-Durchmessers.

Zentral ist der Konusabschnitt 20 von einem vertikal sich erstreckenden, bevorzugt die Vertikalachse x mittig aufnehmenden Kaminabschnitt 21 durchsetzt. Dieser ist weiter bevorzugt insgesamt rohrartiger Gestalt, wobei eine nach vertikal unten weisende Einströmöffnung 22 bevorzugt bündig mit der unteren Stirnfläche des Konusabschnittes 20 abschließt. Die in vertikaler Richtung zu der Einströmöffnung 22 beabstandete Ausströmöffnung 23 des Kaminabschnittes 21 ist bevorzugt vertikal beabstandet zu der vertikal oberen Stirnfläche des Konusabschnittes 20, dies weiter bevorzugt mit einem vertikalen Abstandsmaß, welches dem 0,5- bis 2-Fachen der vertikalen Höhe des Konusabschnittes 20 entspricht.

Der hierdurch gebildete Kamin 24 weist bevorzugt einen kreisscheibenförmigen Querschnitt auf. Alternativ sind diesbezüglich auch langgestreckt runde oder langgestreckt rechteckige, weiter beispielsweise auch quadratische Querschnitte, wobei weiter bevorzugt die Querschnittsfläche des Kamins 24 über die gesamte vertikale Höhe gleichbleibend gebildet ist.

Das Durchmessermaß des Kamins 24 bzw. ein maximales Querschnitts-Erstreckungsmaß des Kamins 24 entspricht bevorzugt dem 0,1- bis 0,3-Fachen des Durchmessers der Deckelöffnung 11.

Das Leitelement 19 ist bevorzugt insgesamt relativ zu dem Gargut-Auflageboden 14, darüber hinaus auch relativ zu dem Deckel 9 des Gargefäßes 3 vertikal verlagerbar, wozu in der dargestellten Ausführungsform bevorzugt eine von außen zugängliche Handhabe 25 vorgesehen ist.

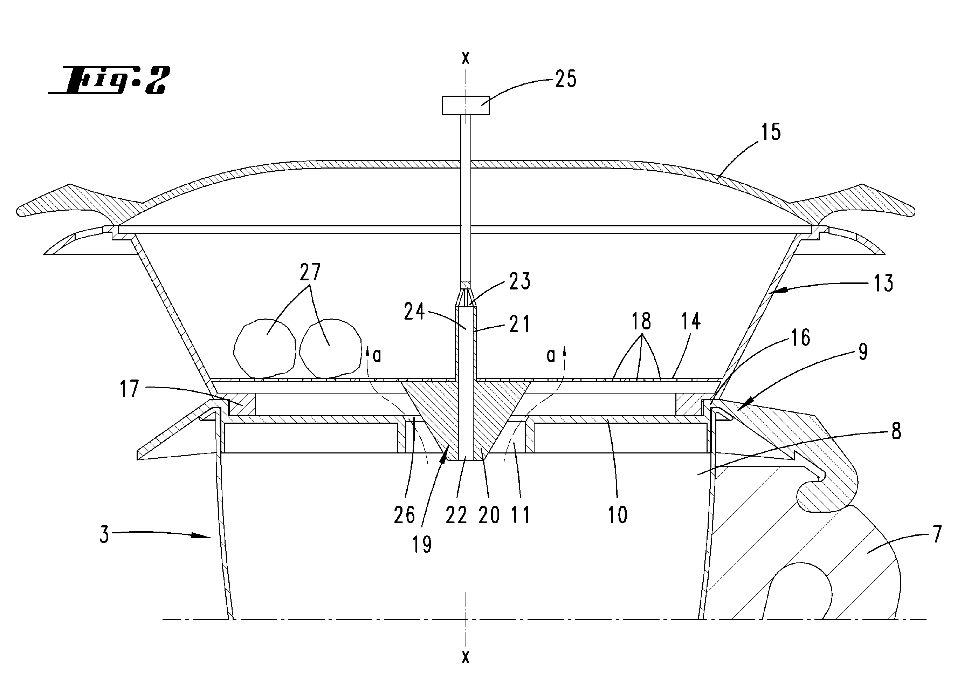

Das Leitelement 19 durchsetzt insbesondere mit dem über den Konusabschnitt 20 nach vertikal oben frei abstehenden Kaminabschnitt 21 den Gargut-Auflageboden 14, wobei der nach vertikal unten weisende Konusabschnitt 20 zumindest in einer Vertikalstellung des Leitelementes 19 die Deckelöffnung 11 zumindest teilweise verschließt, indem der Konusabschnitt 20 in den Bereich der Öffnung 11 einragt (vergleiche Fig. 2).

In der vertikal angehobenen Stellung des Leitelementes 19 ist umgebend zu dem Konusabschnitt 20 im Bereich der Öffnung 11 ein im Grundriss ringförmiger Durchlass 26 belassen. In dem Gargefäß 3 erzeugter und nach oben steigender Dampf kann entsprechend durch den ringförmigen Durchlass 26 zunächst in den Zwischenraum zwischen Deckel 9 und Gargut-Auflageboden 14 gelangen und hiernach durch die Durchtrittsöffnungen 18 im Gargut-Auflageboden 14 in den Garraum des Aufsatzgefäßes 13 treten. Es wird entsprechend durch den Dampf (Pfeile a) ein Wärmeeintrag auf das zu garende und auf dem Auflageboden 14 aufliegende Gargut 27 von unten erreicht. Auch kann in dieser Stellung Dampf durch den Kaminabschnitt 21 insbesondere in den Raum oberhalb des Gargutes 27 eintreten, wenngleich bevorzugt zufolge der gegebenen Strömungswiderstände der weitaus größere Dampfanteil von unten durch die Durchtrittsöffnungen 18 eintritt.

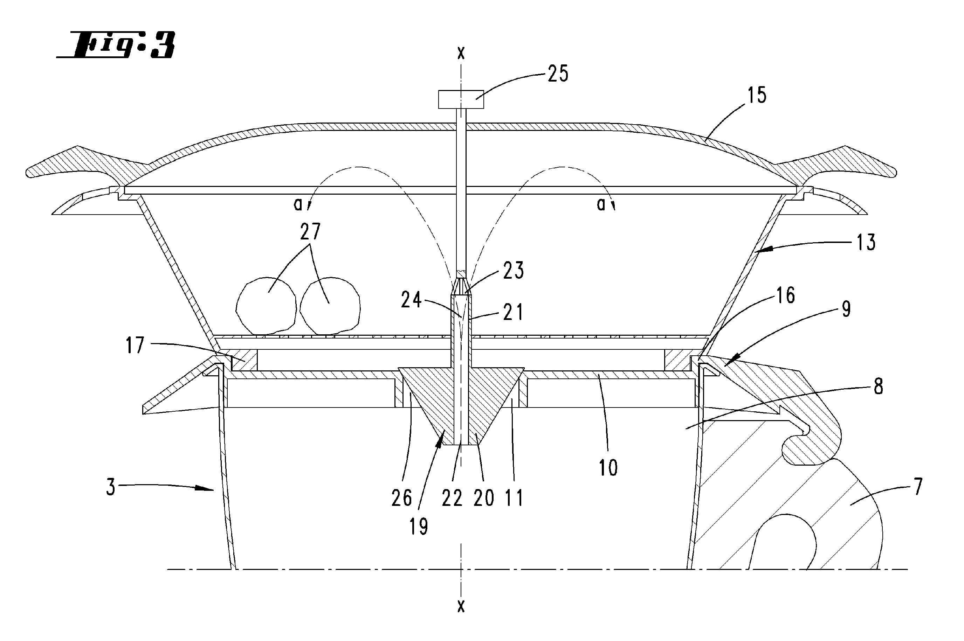

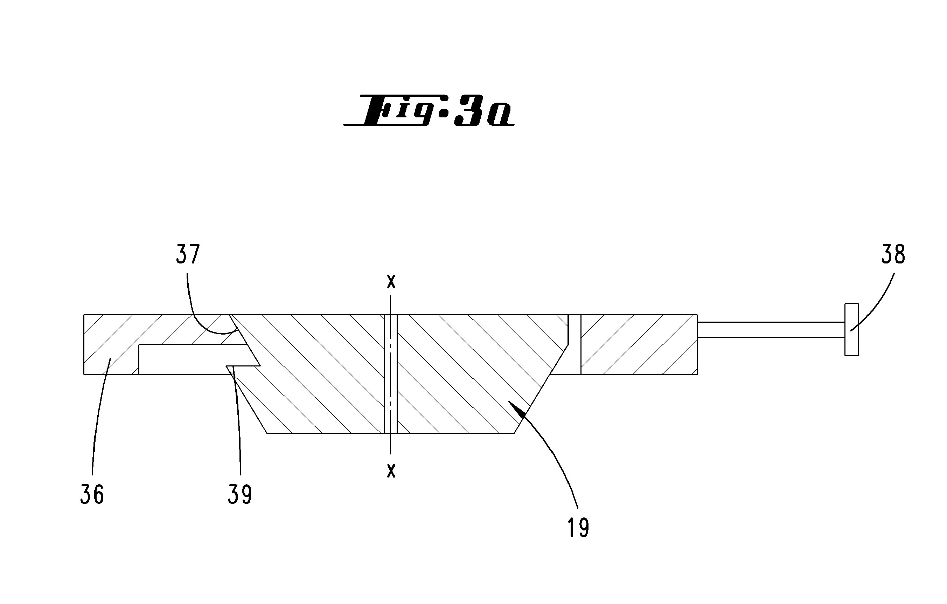

In der in Fig. 3 dargestellten abgesenkten Stellung des Leitelementes 19 dichtet der Konusabschnitt 20 zufolge Anlage an den zugewandten umlaufenden Öffnungsrand die Öffnung 11 ab. Entsprechend kann kein Dampf mehr durch einen etwaig belassenen Durchlass in den Zwischenraum zwischen Gargut-Auflageboden 14 und Deckel 9 eintreten und entsprechend das Gargut 27 von unten beaufschlagen. Vielmehr wird der Dampf in dieser Stellung bevorzugt allein durch den Kaminabschnitt 21 geführt, dessen Ausströmöffnung 23 auch in dieser Stellung oberhalb des Gargut-Auflagebodens 14 ausgerichtet ist. Die Ausströmöffnung 23 ist in der dargestellten Ausführungsform so ausgerichtet, dass deren Öffnungsfläche bevorzugt parallel zum Gargut-Auflageboden 14 verläuft. Alternativ kann eine oder können mehrere Ausströmöffnungen 23 zusätzlich oder alternativ zu der stirnseitigen Ausströmöffnung 23 in der umlaufenden Mantelwandung des Kaminabschnittes 21 vorgesehen sein.

In der dargestellten stirnseitigen Anordnung der Ausströmöffnung 23 wird der durch den Kamin 24 zwangsgeführte Dampf in Richtung auf die dem Gargut-Auflageboden 14 zugewandte Unterseite des Aufsatzdeckels 15 geleitet, so dass der einströmende Dampf durch den Aufsatzdeckel 15 eine Umlenkung erfährt, zur Wärmebeaufschlagung des Gargutes 27 von oben (Pfeile a). Zusätzlich durch die Dampfbeaufschlagung von oben erfährt das Gargut 27 bevorzugt zudem eine Beaufschlagung durch Reflektionswärme des Aufsatzdeckels 15. Durch jede weitere vertikale Zwischenstellung des Leitelementes 19 zwischen der bevorzugt anschlagbegrenzten vertikal oberen Stellung gemäß Fig. 2 und der in Zusammenwirkung mit dem Öffnungsrand anschlagbegrenzten vertikal unteren Stellung gemäß Fig. 3 ist auch eine Mischform der Bedampfung des Gargutes 27 von unten sowie von oben möglich.

Fig. 3a zeigt eine prinzipielle Anordnung für eine Höhenverstellung des Leitelementes 19 durch seitliche Betätigung.

Im Einzelnen ist ein Betätigungselement 36 vorgesehen, das auch beispielsweise umfassend, weiter beispielsweise als Rundelement, bezüglich des Leitelementes 19 angeordnet sein kann. Es kann in dem Deckel 9 oder bevorzugt in dem Aufsatzgefäß 13 gehaltert sein, weiter bevorzugt in einem seitlichen Bereich dieser Teile.

In weiterer Einzelheit ist an dem Einwirkungsteil 36 eine Konusfläche 37 ausgebildet, die gegenläufig gerichtet ist zu einer entsprechenden Konusfläche an dem Leitelement 19. Es kann weiter eine Stufenfläche 39 vorgesehen sein, welche eine Begrenzung der Verschiebung nach oben erbringen kann.

Mittels der seitlich herausragenden Handhabe 38 kann dann durch entsprechendes Ziehen eine Verstellung nach oben erreicht werden. Bei Drücken wird die Konusfläche des Leitelementes freigegeben, so dass es aufgrund von Schwerkraft absinken kann.

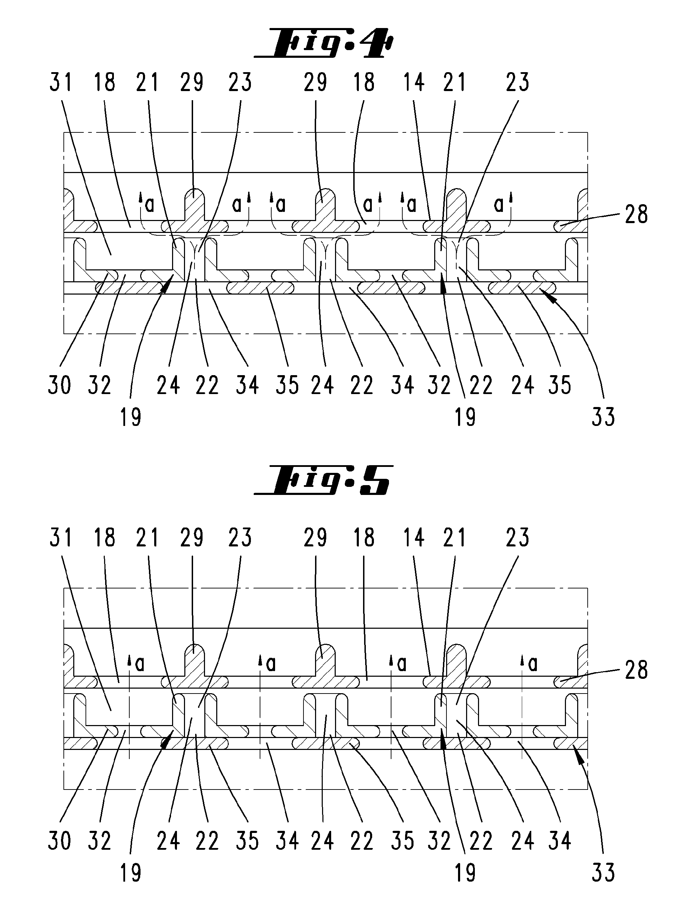

Die Fig. 4 bis 6 zeigen eine weitere Ausführungsform. In dieser ist zunächst der Gargut-Auflageboden 14 mit bevorzugt gleichmäßig über die Fläche verteilt angeordneten, gegenüber einer Bodenfläche 28 des Auflagebodens 14 vertikal nach oben vorstehenden Distanzbereichen 29 versehen. Hierbei handelt es sich bevorzugt um noppen- oder leistenartige Erhebungen. Weiter sind diese Distanzbereiche 29, insbesondere bei noppen- oder zylinderartiger Ausgestaltung derselben in einem Querschnitt gemäß Fig. 4 zwischen den Dampfdurchtrittsöffnungen 18 des Gargut-Auflagebodens 14 positioniert.

In einer vertikal unterhalb des Gargut-Auflagebodens 14 sich erstreckenden Ebene ist ein Bodenteil 30 vorgesehen. Dieses erstreckt sich, wie auch der Gargut-Auflageboden 14, bevorzugt über die gesamte sich innerhalb der Wandung des Aufsatzgefäßes 13 ergebenden Fläche. In diesem Bodenteil 30 sind eine Mehrzahl von kaminartigen Leitelementen 19 ausgebildet, deren bevorzugt in einem Horizontalquerschnitt betrachteten hohlzylindrischen Kaminabschnitte 21 sich ausgehend von dem Bodenteil 30 in Richtung auf die Unterseite des Gargut-Auflagebodens 14 erstrecken.

Weiter bevorzugt sind die kaminartigen Leitelemente 19 in vertikaler Richtung betrachtet überdeckt von den geschlossenen, die Distanzbereiche 29 tragenden Abschnitten der Bodenfläche 28 des Auflagebodens 14, wobei weiter bevorzugt die nach vertikal oben gerichtete Ausströmöffnung 23 eines jeden Leitelementes 19 vertikal beabstandet ist zu der zugewandten Unterseite des Auflagebodens 14 beziehungsweise der Bodenfläche 28.

In Zusammenwirkung mit dem Bodenteil 30 und weiter bevorzugt mit der umlaufenden Wandung des Aufsatzgefäßes 13 ergibt sich eine Auffangwanne, die durch die sich vertikal erstreckenden Leitelemente 19 durchsetzt ist, wobei die Ausströmöffnungen 23 der Leitelemente 19 überlaufartig wirkend eine Ebene definieren, bis zu welcher die Auffangwanne 31 in der Lage ist, insbesondere Garflüssigkeit und/oder Kondensat aufnehmen zu können.

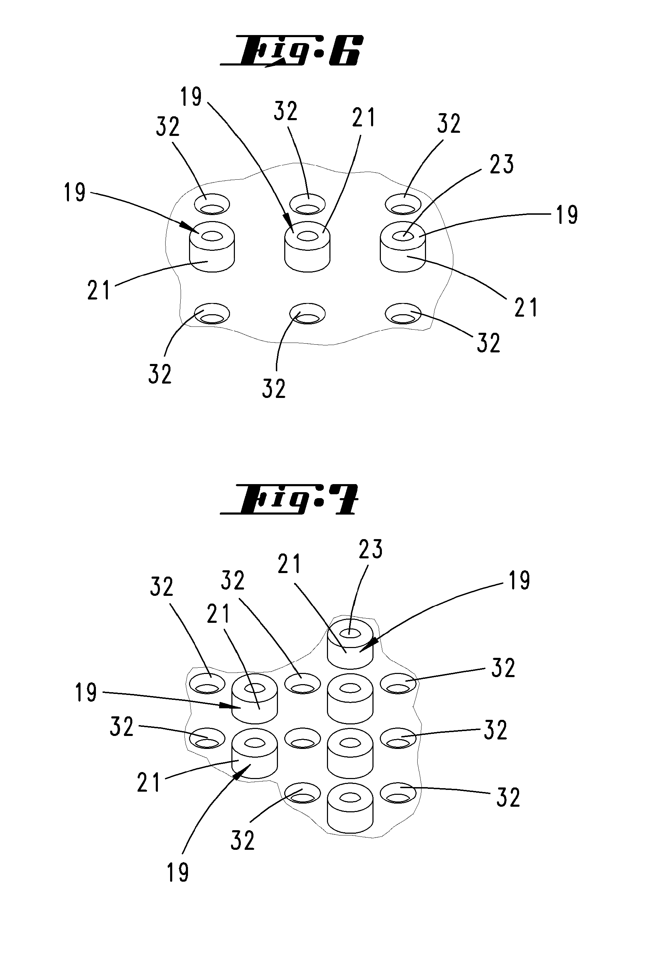

Im Querschnitt gemäß Fig. 4 betrachtet sind jeweils zwischen zwei benachbarten kaminartigen Leitelementen 19 weiter in dem Bodenteil 30 Ablauföffnungen 32 vorgesehen. Diese liegen weiter bevorzugt in vertikaler Überdeckung zu den Durchtrittsöffnungen 18 im Gargut-Auflageboden 14. Alternativ ist die Anordnung einer Ablauföffnung 32, wie in Fig. 7 beispielhaft dargestellt, bevorzugt mittig einer durch vier benachbarte Leitelemente 19 aufgespannten Fläche positioniert.

Das Bodenteil 30 ist weiter unterfangen von einem Verschlussteil 33. Hierbei handelt es sich bevorzugt um einen plattenförmigen Verschlussschieber, der zumindest in einer Schiebestellung die Ablauföffnungen 32 und/oder die Einströmöffnungen 22 der Leitelemente 19 überdeckt.

So weist das plattenförmige Verschlussteil 33 entsprechend der grundrissmäßigen Anordnung der Leitelemente 19 Durchbrechungen 34 auf, zwischen welchen Durchbrechungen 34 geschlossene Bereiche 35 sich erstrecken.

Das Verschlussteil 33 ist bevorzugt in seiner Erstreckungsebene, d.h. weiter entsprechend bevorzugt in einer senkrecht zur Vertikalachse x sich erstreckenden Ebene schiebeverlagerbar, alternativ um die Vertikalachse x drehverlagerbar. Die Verlagerung des Verschlussteiles 33 erfolgt bevorzugt durch den Benutzer, gegebenenfalls unter Nutzung elektromotorischer Mittel.

Zufolge entsprechender Verlagerung des Verschlussteils 33 sind in einer Stellung gemäß Fig. 4 die Einströmöffnungen 22 der kaminartigen Leitelemente 19 freigelegt zufolge entsprechender Anordnung der verschlussteilseitigen Durchbrechungen 34. Zugleich überdecken die geschlossenen Bereiche 35 des Verschlussteils 33 die Ablauföffnungen 32, so dass sich entsprechend in der Auffangwanne 31 Garflüssigkeit und/oder im Zuge des Dampfgarens entstehendes Kondensat sammeln kann. Diese Verschlussteilstellung wird darüber hinaus bevorzugt auch vor einem Abnehmen des Aufsatzgefäßes 13 vom Gargefäß 3 und anschließendem Abstellen auf einer Ablagefläche oder dergleichen eingenommen, um so einem Abtropfen von Flüssigkeit entgegenzuwirken.

In der auf dem Gargefäß 3 bzw. auf dem Deckel 9 aufgesetzten Stellung des Aufsatzgefäßes 13 und in der vorbeschriebenen Verschlussteilstellung strömt der in dem Gargefäß 3 erzeugte Dampf bevorzugt allein durch die Kamine 24 der Leitelemente 19, wobei sich weiter der aus den Leitelementen 19 austretende Dampf zufolge der beabstandeten Überdeckung derselben durch das Bodenteil 30 gleichmäßig unterhalb des Gargut-Auflagebodens 14 verteilt und hiernach durch die Durchtrittsöffnungen 18 von unten das auf dem Auflageboden 14 aufliegende Gargut umströmt (Pfeile a). Hierbei ist in vorteilhafter Weise verhindert, dass das Gargut sämtliche Dampföffnungen verschließt und diese sich zusetzen.

In Fig. 5 ist eine Verschlussteilstellung dargestellt, in welcher die geschlossenen Bereiche 35 des Verschlussteiles 33 die Einströmöffnungen 22 der Leitelemente 19 verschließen, wonach der Dampf zufolge Übereinanderanordnung der verschlussteilseitigen Durchbrechungen 34 und der Ablauföffnungen 32, darüber hinaus bevorzugt auch der Durchtrittsöffnungen 18 im Auflageboden 14 bevorzugt ohne weitere Umlenkung oder Verteilung in den oberhalb des Auflagebodens 14 gebildeten Garraum eintritt (Pfeile a). Im Zuge des Garens entstehende Garflüssigkeit und/oder Kondensat kann in dieser Verschlussteilstellung unmittelbar durch die Ablauföffnungen 32 und die Durchbrechungen 34 des Verschlussteils 33 zurück in das Gargefäß 3 gelangen, dies unter entsprechender Durchsetzung der Deckelöffnung 11.

Mittels des Verschlussteils 33 sind weiter die Einströmöffnungen 22 der Leitelemente 19 wie auch die Ablauföffnungen 32 auch nur teilweise verschließbar, so dass eine Mischform der vorbeschriebenen Bedampfung des Gargutes erreicht werden kann.

Hinsichtlich der Kaminabschnitte 21 kann ein Verhältnis des freien Durchmessers zu einer freien Höhe über dem Bodenteil 30 zwischen 0,5 und 2 verwirklicht sein. Bezüglich eines Abstandes zwischen einer oberen Stirnfläche eines Kaminabschnitts 21 (bevorzugt bezogen auf einen Außenrand der Stirnfläche) und der Unterseite des Gargut-Auflagebodens 14 ist bevorzugt, dass die sich ergebende (seitliche) zylindrische Öffnungsfläche, durch welcher einen Kaminabschnitt 21 durchströmender Dampf seitlich abströmt, gleich oder größer der Fläche entsprechend einem freien inneren Durchmesser des Kaminabschnitts 21 ist. Hinsichtlich "größer" kann die zylindrische Öffnungsfläche bis hin zum 30-Fachen betragen. Bevorzugt ist das ca. 5-Fache.

Hinsichtlich der Ausführungsform der Fig. 4 und 5 kann auch auf die Überstände 29 verzichtet sein.

Im Weiteren kann auch eine Kombination der Ausführungsformen der Fig. 2 und 3 sowie 4 und 5 vorgesehen sein.

### Bezugszeichenliste:

- 1: Küchenmaschine
- 2: Gehäuse
- 3: Gargefäß
- 4: Gefäßaufnahme
- 5: Elektromotor
- 6: Rührwerk
- 7: Handgriff
- 8: Gargefäßöffnung
- 9: Deckel
- 10: Aufstandsfläche
- 11: Öffnung
- 12: Taste/Drehsteller
- 13: Aufsatzgefäß
- 14: Gargut-Auflageboden
- 15: Aufsatzdeckel
- 16: Rand
- 17: Stützrand
- 18: Durchtrittsöffnung
- 19: Leitelement
- 20: Konusabschnitt
- 21: Kaminabschnitt
- 22: Einströmöffnung
- 23: Ausströmöffnung
- 24: Kamin
- 25: Handhabe
- 26: Durchlass
- 27: Gargut
- 28: Bodenfläche
- 29: Distanzbereich
- 30: Bodenteil
- 31: Auffangwanne
- 32: Ablauföffnung
- 33: Verschlussteil
- 34: Durchbrechung
- 35: Geschlossener Bereich
- 36: Einwirkungsteil
- 37: Konusfläche
- 38: Handhabe
- 39: Stufenfläche

- a: Pfeil
- x: Vertikalachse

## Patentansprüche

1. Gargefäß (3) mit einem Aufsatzgefäß (13), wobei das Aufsatzgerät (13) einen Gargut-Auflageboden (14) aufweist, wobei eine oder mehrere sich senkrecht zur Erstreckung des Gargut-Auflagebodens (14) erstreckende, kaminartige Leitelemente (19) ausgebildet sind, **dadurch gekennzeichnet, dass** die Leitelemente (19) hinsichtlich ihres Öffnungsquerschnittes veränderbar ausgebildet sind.

2. Gargefäß nach Anspruch 1, **dadurch gekennzeichnet, dass** das Leitelement (19) in einem Bodenteil (30) ausgebildet ist und in Zusammenwirkung mit dem Bodenteil (30) sich eine Auffangwanne (31) etwa für Kondensat ergibt und/oder dass eine Ausströmöffnung (23) des kaminartigen Leitelements (19) vertikal beabstandet ist zu dem Gargut-Auflageboden (14) und/oder dass eine Einströmöffnung (22) des Leitelements (19) vertikal unterhalb des Gargut-Auflagebodens (14) ausgebildet ist.

3. Gargefäß nach Anspruch 2, **dadurch gekennzeichnet, dass** die Einströmöffnung (22) unter Durchsatz eines ggf. gesonderten Gargefäß-Deckels (9) bis in das Gargefäß 3 hineinragt.

4. Gargefäß nach einem der Ansprüche 2 oder 3, **dadurch gekennzeichnet, dass** das Bodenteil (30) unterhalb des Gargut-Auflagebodens (14) angeordnet ist.

5. Gargefäß nach einem der Ansprüche 2 bis 4, **dadurch gekennzeichnet, dass** in der Auffangwanne (31) eine oder mehrere Ablauföffnungen (32) ausgebildet sind.

6. Gargefäß nach Anspruch 5, **dadurch gekennzeichnet, dass** eine Ablauföffnung (32) durch ein Verschlussteil (33) verschließbar ist.

7. Gargefäß nach Anspruch 6, **dadurch gekennzeichnet, dass** das Verschlussteil (33) als Verschlussschieber ausgebildet ist.

8. Gargefäß nach einem der Ansprüche 6 oder 7, **dadurch gekennzeichnet, dass** das Verschlussteil (33) sowohl zum Verschluss einer Einströmöffnung (22) des kaminartigen Leitelements (19) wie auch zum Verschluss einer Ablauföffnung (32) ausgebildet ist.

9. Gargefäß nach einem der Ansprüche 2 bis 8, **dadurch gekennzeichnet, dass** eine vertikal obere Ausströmöffnung des Leitelements (19) ganz oder teilweise von einem geschlossenen Bodenabschnitt des Gargut-Auflagebodens (14) überdeckt ist.

10. Gargefäß nach einem der vorhergehenden Ansprüche, **dadurch gekennzeichnet, dass** der Gargut-Auflageboden (14) gegenüber einer Bodenfläche (28) vertikal nach oben vorstehende Distanzbereiche (29) ausbildet.

11. Gargefäß nach einem der vorhergehenden Ansprüche, **dadurch gekennzeichnet, dass** der Gargut-Auflageboden (14) Durchtrittsöffnungen (18) für einen Dampfdurchtritt belässt.

12. Gargefäß nach Anspruch 11, **dadurch gekennzeichnet, dass** die Dampfdurchtrittsöffnungen (18) in einem Querschnitt zwischen den Distanzbereichen (29) ausgebildet sind.

13. Gargefäß nach einem der vorhergehenden Ansprüche, **dadurch gekennzeichnet, dass** das Leitelement (19) hinsichtlich der vertikalen Höhe seiner Aus- und/oder Einströmöffnungen (22, 23) veränderbar ist.

14. Gargefäß nach einem der vorhergehenden Ansprüche, **dadurch gekennzeichnet, dass** unterhalb des Gargut-Auflagebodens (14) ein Zweitboden, bspw. gebildet durch den Gargefäß-Deckel (9), ausgebildet ist, der eine dem Leitelement (19) zugeordnete Öffnung (11) aufweist und dass das Leitelement (19) zumindest teilweise, mit Ausnahme des Kaminweges selbst, die Öffnung (11) verschließt.

15. Gargefäß nach Anspruch 14, **dadurch gekennzeichnet, dass** das Leitelement (19) zugeordnet zu der Öffnung (11) einen Konusabschnitt (20) aufweist.
